# EUROPÄISCHE PATENTSCHRIFT

(11) **EP 0 579 800 B1**
(45) Veröffentlichungstag und Bekanntmachung des Hinweises auf die Patenterteilung: **15.07.1998**
(21) Anmeldenummer: 93902238.0
(22) Anmeldetag: 21.01.1993
(51) Int. Cl.: G09B 23/28

(54) **LEHR- UND ÜBUNGSGERÄT ZUR SIMULATION UND ÜBUNG ZAHNÄRZTLICH-KLINISCHER ARBEITSGÄNGE**
TRAINING DEVICE FOR SIMULATING AND PRACTISING DENTAL PROCEDURES
APPAREIL D'ENSEIGNEMENT ET D'ENTRAINEMENT DESTINE A LA SIMULATION ET A L'APPRENTISSAGE DE METHODES DE TRAVAIL CLINICO-DENTAIRES

(30) Priorität: 11.02.1992 DE 4203957
(43) Veröffentlichungstag der Anmeldung: 26.01.1994
(73) Patentinhaber: KALTENBACH & VOIGT GMBH & CO., 88400 Biberach (DE)
(72) Erfinder: LANG, Hans-Walter, D-7970 Leutkirch (DE); STRAKA, Alfred, D-7972 Isny (DE); BERLINGHOFF, Frank, D-7970 Leutkirch 1 (DE)
(74) Vertreter: Schmidt-Evers, Jürgen, Dipl.-Ing.
(86) Internationale Anmeldenummer: EP9300133
(87) Internationale Veröffentlichungsnummer: WO9316457

(56) Entgegenhaltungen:
- FR-A- 1 033 151
- FR-A- 2 111 049
- FR-A- 2 483 105
- US-A- 3 520 060

## Beschreibung

Die Erfindung bezieht sich auf ein Lehr- und Übungsgerät nach dem Oberbegriff des Anspruchs 1.

Es ist Sinn und Zweck eines solchen Lehr- und Übungsgerätes, dem Behandler eine dem menschlichen Körper möglichst naturgetreue Arbeitssituation zu ermöglichen, damit der Behandler beim. Vorhandensein der anatomischen Gegebenheiten eines erwachsenen, durchschnittlichen Menschen, seine Lehr- und Übungstätigkeit ausführen kann. Dabei stellt die Halterung des Phantomkopfes ein besonderes Problem dar, weil für verschiedene zahnärztliche Behandlungen unterschiedliche Kopfstellungen einzustellen sind, um eine günstige Kopflage zu erreichen und eine handhabungsfreundliche Behandlung zu gewährleisten.

In der DE 39 41 332 C2 ist ein Lehr- und Übungsgerät zur Simulation und Übung zahnärztlicher Arbeitsgänge mit einem Phantomkopf oder einer Phantombüste beschrieben, wobei der Kopf von einem an ihm befestigten Hals getragen ist. Der Phantomkopf oder die Phantombüste ist in einer Vertikalebene schwenkbar an einem Träger gelagert. Der Hals entspricht in etwa der natürlichen Form und Abmessung des menschlichen Halses. Die Möglichkeit weiterer Kopfbewegungen ist in dieser Druckschrift nicht beschrieben.

Aus der US 35 20 060 ist ein Kopfmodell der eingangs angegebenen Art für das Lehren und Üben zahnärztlicher Röntgenaufnahmen beschrieben. Dieses bekannte Kopfmodell besteht aus einem Kopfkern und eine über ihn ziehbare Kopfhülle aus weichem Kunststoffmaterial, wobei die Kopfhülle einen Hals in einer der menschlichen Größe und Form entsprechenden Größe und Form umfaßt. Der Kopfkern ist durch eine Halsstange mit einem Kugelgelenk schwenkbar abgestützt, die am Kopfkem befestigt ist. Bei diesem bekannten Phantomkopf besteht der Hals aus einem weichen Material, das keine Tragfunktion auszuüben vermag. Die Halsstange ist unmittelbar am Kopfkern befestigt.

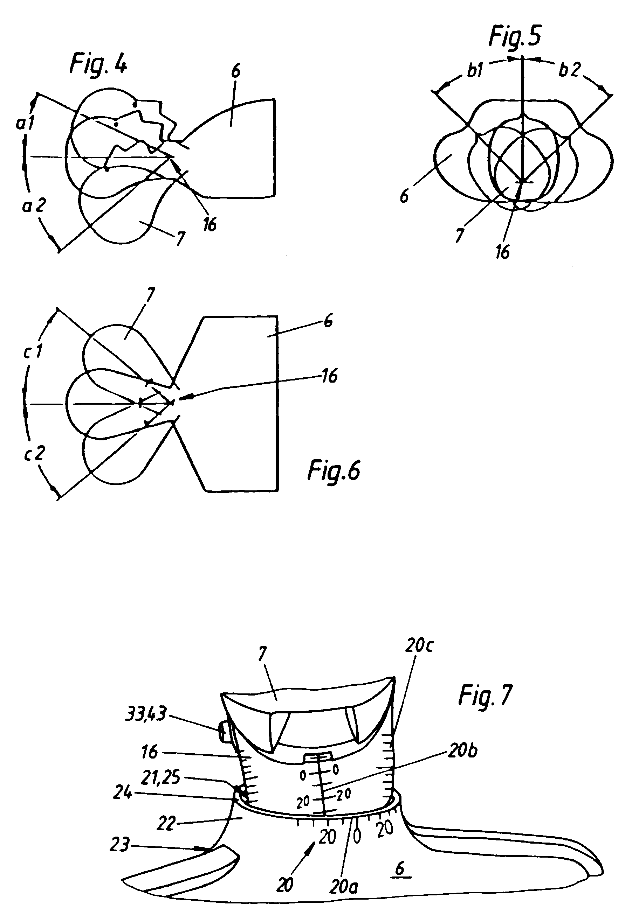

Im DE-GM 77 37 839 ist ein Phantomkopf ohne Hals beschrieben, wobei der Phantomkopf in einem Kugelgelenk schwenkbar und in der jeweiligen Schwenkstellung feststellbar gelagert ist, das im Bereich des Hinterkopfes angeordnet ist. Das Kugelgelenk ist am oberen Ende einer Tragstange angeordnet, die gemäß Fig. 4 an einer Tragplatte befestigt sein kann.

Eine der vorbeschriebenen Ausgestaltung ähnliche Ausgestaltung ist aus der DE 25 31 436 B2 zu entnehmen, wobei bei dieser Ausgestaltung der Hinterkopf als Teil des Kugelgelenkes ausgebildet ist.

In der DE 24 51 618 A1 ist ein Phantomkopf beschrieben, der mittels einem einer Behandlungsstuhl-Rückenlehne ähnlichen oder entsprechenden und entsprechend den Bewegungen der Rückenlehne in der Neigung zur Horizontalen sowie der Höhe nach verstellbaren Auflagerbauteil beweglich gelagert ist, wobei der Phantomkopf auf dem Auflagerbauteil im Bereich seines freien Endes gelagert ist. Dieser Phantomkopf ist gemäß Figur 7 auf eine sich im wesentlichen vertikal erstreckenden Stange verstellbar gelagert. Ein Hals ist nicht vorgesehen. Es ist zwar ein dem menschlichen Oberkörper entsprechender Simulations- Aufbau vorgesehen, jedoch ist dieser vom Kopf getrennt auf der vorhandenen Rückenlehne angeordnet.

Ein Nachteil der bekannten Ausgestaltungen besteht darin, daß sie sehr unansehlich sind und deshalb die Lehr- und Übungstätigkeit des Behandlers nicht fördern. Ferner entsprechen die bei ihnen üblichen Kopfbewegungen nicht den natürlichen Kopfbewegungen eines erwachsenen, durchschnittlichen Menschen.

Ein anderer Nachteil besteht darin, daß das zugehörige Gelenk von außen manuell direkt zugänglich ist, wodurch die Gefahr von Klemmungen und Verletzungen der Bedienungshände beim Verstellen und Einstellen des Gelenks besteht. Diese Gefahr besteht nicht nur im unmittelbaren Bereich des Gelenks zwischen den vorhandenen Gelenkteilen insbesondere in deren Anschlagbereich, sondern auch zwischen dem unteren Ende des Kopfbereiches und der Halsstange und zwar insbesondere dann, wenn sich das Gelenk an dem Kopf zugewandten Ende der Halsstange befindet.

Der Erfindung liegt die Aufgabe zugrunde, ein Lehr- und Übungsgerät der eingangs angegebenen Art so auszugestalten, daß eine einfache, nicht störende Lagerung für den Kopf erreicht wird, die Schwenkbewegungen des Kopfes sowie eine Feststellung des Kopfes in der jeweiligen Bewegungsstellung handhabungsfreundlich ermöglicht.

Diese Aufgabe wird mit den Merkmalen des neuen Anspruches 1 gelöst. Bei der erfindungsgemäßen Ausgestaltung werden. Beeinträchtigungen der Bedienungshände des Behandlers, insbesondere die Gefahr von Klemmungen oder Verletzungen vermieden. Es ist auch möglich, den Phantomkopf handhabungsfreundlich und einfach zu verstellen und zu feststellen, damit der Behandler so wenig Aufmerksamkeit wie möglich auf diese mechanischen Verstell- und Feststelltätigkeit aufbringen muß. Außerdem ist eine genaue Einstellung möglich.

Der Phantomkopf erhält nicht nur eine der Anatomie eines vorzugsweise erwachsenen durchschnittlichen Menschen entsprechende Form, sondern die erfindungsgemäße Ausgestaltung ermoglich auch eine Uberdeckung des Gelenks, so daß die eingangs beschriebene Gefahr von Beeinträchtigungen oder Verletzungen der Bedienungshand vermieden sind. Dies ist dadurch vorgegeben, daß das Gelenk im Hals angeordnet ist und außerdem das untere Halsende einen verhältnismäßig großen Abstand vom Phantomkopf oder Halsgelenk aufweist. Die erfindungsgemäße Ausgestaltung verleiht dem Phantomkopf auch ein angenehmes Äußeres, wodurch dem Bestreben beigetragen wird, dem Behandler eine den anatomischen Verhältnissen des menschlichen Körpers möglichst entsprechende Arbeitssituation zu vermitteln. Außerdem ermöglicht die Erfindung auch eine handhabungsfreundliche Feststellung und Lösung des Gelenks.

Ein weiterer Vorteil der erfindungsgemäßen Ausgestaltung besteht darin, daß die Position des Gelenks im Hals der Anatomie des menschlichen Körpers näher kommt als es bei den bekannten Ausgestaltungen der Fall ist. Wenn das Gelenk im etwa mittleren Längenbereich des Halses angeordnet wird, ist eine vorteilhafte Position vorgegeben, die dem natürlichen Bewegungsablauf ziemlich nahe kommt. Es ist vorteilhaft, den erfindungsgemäßen Phantomkopf an einer Tragstange zu halten, die sich koaxial zum Hals erstreckt und in eine Eingriffsöffnung am unteren Ende des Halses in diesen einfaßt. Es läßt sich auch in einfacher Weise ein Kugelgelenk verwirklichen, dessen Kugelschale die Eingriffsöffnung in Richtung auf den Phantomkopf begrenzt. Die Querschnittsgröße der Eingriffsöffnung ist am unteren Ende des Halses unter Berücksichtigung der Querschnittsgröße der Tragstange so groß zu bemessen, daß die gewünschten Schwenkbewegungen ausgeführt werden können. Dem Kugelgelenk kann eine in jeder Schwenkstellung wirksame bzw. aktivierbare Feststellvorrichtung dadurch zugeordnet sein, daß ein Wandteil der Kugelpfanne durch ein Spannglied gegen die Gelenkkugel spannbar ist und dadurch Reibung erzeugt. Dabei empfiehlt sich eine solche Reibungs-bzw. Klemmspannkraft, die zum einen so groß ist, daß sie den Phantomkopf unter den bei der Behandlung auftretenden Belastungen in seiner gewünschten Arbeitsposition hält und zum anderen zu einer Verstellung des Phantomkopfes überdrückt werden kann, so daß kein Feststellen und Lösen des Gelenks erforderlich ist. Hierzu eignet sich sehr gut eine elastische Spannkraft, die vorzugsweise durch eine Druckfeder ausgeübt werden kann. Zur Realisierung veränderlicher Spannkräfte und Feststellkräfte des Gelenks eignet sich ein Schubkeilgetriebe, mit dem aufgrund von Keilwirkung ein Druckglied mehr oder weniger beaufschlagt werden kann, um die veränderliche Spann- oder Klemmwirkung im Gelenk zu verändern. Es eignet sich sehr gut ein Einstellglied, das denn Hals nach- außen durchfaßt und somit zugänglich und manuell betätigbar ist. Vorzugsweise ist die Anordnung so zu treffen, daß eine Änderung der Klemm- oder Druckkraft durch manuellen Angriff am Einstellelement ohne ein Werkzeug erfolgen kann. Dies läßt sich dadurch erreichen, daß ein Untersetzungsgetriebe zwischen dem von außen zugänglichen Einstellglied und dem Klemm- oder Druckglied wirksam ist. Ein kombiniertes Spindeltrieb-Schubkeilgetriebe ist dabei sehr vorteilhaft und ermöglicht eine handhabungsfreundliche und feine Einstellung der Klemm- bzw. Druckkraft.

Es trägt zur Erfüllung der eingangs angegebenen Forderungen bei, wenn dem Phantomkopf eine einen Oberkörper bzw. Brustbereich darstellende Phantombüste zugeordnet ist, die durch eine Teilungsfuge vom Hals des Phantomkopfes getrennt ist und somit dessen wahlweise Verschwenkung ermöglicht. Eine vorteilhafte Ausgestaltung ergibt sich dann, wenn die Phantombüste ein dem unteren Ende des Halses gegenüberliegendes Halsloch aufweist, in das dieser vorzugsweise mit einer halbkugelförmigen Rundung einfaßt. Hierdurch läßt sich ein vorteilhafter und im wesentlichen geschlossener Übergang zwischen Hals und Büste schaffen. Eine die Gelenkkugel des Halsgelenks tragende Tragstange kann in der Büste gehalten sein und das Halsloch nach außen durchfassen.

Es ist auch vorteilhaft, dem Phantomkopf eine Hinterkopfstütze zuzuordnen und somit eine Abstützung für den Phantomkopf zu schaffen, die vom Gelenk unabhängig ist und es deshalb ermöglicht, bei gelöstem oder leichtgängigem Gelenk und bei einer Abstützung des Phantomkopfes an der Hinterkopfstütze den Kopf zu bewegen, um z.B. bestimmte Behandlungsmethoden auszuführen. Grundsätzlich führt eine Hinterkopfstütze zu einer Stabilisierung der Halterung des Phantomkopfes, so daß dessen Halsgelenk weniger stabil ausgeführt zu werden braucht. Die erfindungsgemäße Hinterkopfstütze ermöglicht somit auch Behandlungen bei gelöstem oder leichtgängigem Gelenk. Eine an die Vertikalbewegung des Phantomkopfes anpaßbare und jeweils feststellbare Hinterkopfstütze ermöglicht die vorgenannten Vorteile auch in verschiedenen Stellungen des Phantomkopfes. Für eine Einstellung der Hinterkopfstütze eignet sich vorzugsweise eine kreisabschnittförmige Bogenführung für die Hinterkopfstütze, die vorzugsweise an der Tragstange des Phantomkopfes angeordnet ist und z.B. durch Klemmen stufenlos oder durch eine Verriegelung in Stufen einstellbar ist.

Es trägt auch zu einer den anatomischen Verhältnissen des menschlichen Körpers entsprechenden Arbeitssituation bei einem Phantomkopf bei, wenn dem Gelenk eine Führung zugeordnet ist, die die Freiheitsgrade des Gelenks so begrenzt, daß sie den anatomischen Möglichkeiten des durchschnittlichen Menschen entsprechen. Dies trägt insbesondere dazu bei, den Behandler an die Grenzen dieser Freiheitsgrade und somit an den Bewegungsbereich des Phantomkopfes zu gewöhnen.

Zu einer optimalen Phantomkopfeinstellung ist es auch vorteilhaft, dem Kopfträger ein weiteres Gelenk zuzuordnen, das einem Rücken- oder Hüftgelenk entspricht und eine stufenlose oder stufenförmige Verschwenkung des Phantomkopfes in einer vertikalen Ebene ermöglicht. Hierdurch wird nicht nur die Arbeitshöhe des Phantomkopfes verändert, sondern auch dessen Neigung, so daß sich besondere Arbeitslagen für den Phantomkopf ergeben bzw. einstellen lassen. Die Handhabung hierfür wird dann sehr erleichtert, wenn dieses Gelenk so versteift oder versteifbar ist, daß es zum einen die Arbeitsbelastungen aufzunehmen vermag ohne zu verstellen und zum anderen willkürlich verstellbar ist, vorzugsweise durch manuelles Überdrucken. Hierzu eignet sich vorzugsweise eine Reibungskupplung mit Reibscheiben, deren Reib- bzw. Klemmkraft veränderlich und einstellbar ist, vorzugsweise so leicht einstellbar, daß sie mit der Bedienungshand ohne ein besonderes Werkzeug zu benutzen einstellbar ist.

Es ist auch von Vorteil, den Kopfträger oder den Büstenträger vertikal höhenverstellbar an einem Trägerunterteil vorzugsweise in Form eines Schrankes anzuordnen. Die Höhenverstellung ermöglicht die Anpassung des Phantomkopfes oder -büste an unterschiedliche Höhenlagen unabhängig von dessen Schwenkstellungen. Ein anderer Grund für eine Höhenverstellung kann auch darin bestehen, den Phantomkopf oder die Phantombüste bei Nichtgebrauch soweit abzusenken, daß der Phantomkopf in einer in seine Bauchlage verschwenkten Position unter ein tischförmiges Gerät zur Durchführung zahntechnischer Arbeiten schiebbar ist. Für die Höhenverstellung kann ein motorischer oder manueller Antrieb dienen. Es eignet sich ein Spindeltrieb, der manuell mittels einer Kurbel betätigbar ist. Ein solcher Spindeltrieb ist sowohl von männlichen als auch von weiblichen Behandlern leicht zu bedienen.

Nachfolgend werden die Erfindung unter Berücksichtigung mehrerer ihrer Aspekte und weitere Vorteile anhand von bevorzugten Ausführungsbeispielen und einer Zeichnung näher erläutert. Es zeigt
Fig. 1 ein erfindungsgemäßes Lehr- und Übungsgerät zur Simulation und Übung ärztlich-klinischer Arbeitsgänge an einem Phantomkopf mit Phantombüste in perspektivischer Darstellung;
Fig. 2 den Phantomkopf mit Phantombüste in der Vorderansicht, teilweise geschnitten;
Fig. 3 die in Fig. 1 mit X gekennzeichnete Einzelheit in vergrößerter Darstellung;
Fig. 4 eine schematische Darstellung des sich in der Rückenlage befindlichen Phantomkopfes in verschiedenen Nickstellungen in der Seitenansicht;
Fig. 5 den Phantomkopf nach Fig. 4 in der Seitenansicht von links;
Fig. 6 den Phantomkopf nach Fig. 4 in der Draufsicht;
Fig. 7 die Einzelheit X in Fig. 1 in der Vorderansicht;
Fig. 8 ein Phantomkopf mit Hinterkopfstütze in der Seitenansicht;
Fig. 9 die Hinterkopfstütze nach Fig. 8 in der Vorderansicht;
Fig. 10 das Gerät nach Fig. 1 in verschiedenen Stellungen der Phantombüste;
Fig. 11 den Teilschnitt XI-XI in Fig. 10;
Fig. 12 eine der Fig. 10 entsprechende Ansicht des Gerätes mit eingeschwenkter Phantombüste und besonderen Einzelteilen;
Fig. 13 ein Lehr- und Übungsgerät in abgewandelter Ausgestaltung;
Fig. 14 ein Lehr- und Übungsgerät in weiter abgewandelter Ausgestaltung;
Fig. 15 einen mit einem Phantomkopf bestückten zahnärztlichen Behandlungsstuhl;
Fig. 16 die in Fig. 15 mit Y gekennzeichnete Einzelheit in vergrößerter Darstellung;
Fig. 17 dem Teilschnitt XVII-XVII in Fig. 16.

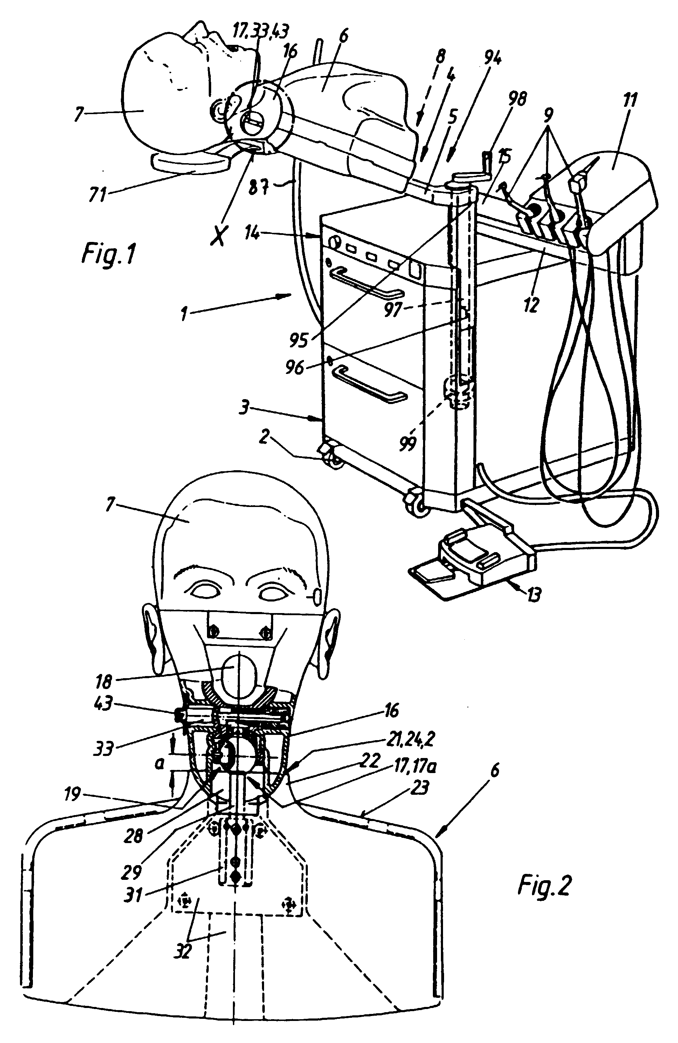

Die Hauptteile des Lehr- und Übungsgerätes 1 sind ein stationäres oder ggfs. auf Rollen 2 fahrbares Gestell oder schrankförmiges Unterteil 3, in dessen oberen Bereich ein Büsten- oder Kopfträger 4, mit einer Phantombüste 6 und einem Phantomkopf 7 vorzugsweise auf einem horizontalen, sich parallel zur Frontseite des Unterteils 3 erstreckenden Tragarm 5, in einer sich bezüglich des Unterteils 3 von vorne nach hinten erstreckenden vertikalen Ebene in einem Schwenkgelenk 8 schwenkbar und in der jeweiligen Schwenkposition feststellbar gelagert ist. Die Fig. 1 zeigt den Phantomkopf in einer Rückenlage, nämlich einer Arbeitsstellung, in der zahnärztliche-klinische oder kieferorthopädische Arbeitsgänge im Mundbereich durchgeführt werden.

Dies kann mittels Behandlungsinstrumenten 9 erfolgen, bei denen es sich um einzelne Behandlungswerkzeuge oder mit Versorgungsschläuchen verbundene Bearbeitungsgeräte handelt, die bei ihrem Nichtgebrauch an einem Halter 11 deponierbar sind, der an einem horizontalen Tragarm 12 vorzugsweise um eine vertikale Schwenkachse schwenkbar gelagert ist, wobei der Tragarm 12 um eine weitere vertikale Schwenkachse schwenkbar in einem Gelenk (nicht dargestellt) an der Oberseite des Unterteils 3 gelagert ist, das sich vorzugsweise im Zentrum der Oberseite befindet. Zur Steuerung der Behandlungsinstrumente 9 und ggfs. weiterer Funktionen kann ein Fußschalter 13 vorgesehen sein. Weitere manuell zu betätigende elektrische Steuerelemente 14 können an der Vorderseite an der Deckplatte 15 des Unterteils 3 angeordnet sein.

Der Phantomkopf 7 weist vorzugsweise einen einstückig angeformten Hals 16 auf, dessen Querschnittsgröße und -länge an den Hals eines durchschnittlichen erwachsenen Menschen angepaßt sind, und der aus einem Material mit einer solchen Festigkeit hergestellt ist, daß er den Kopf 7 zu tragen vermag. Im Bereich des Halses 16 ist ein Halsgelenk 17 vorgesehen, das sowohl vertikale Schwenkbewegungen (Fig. 4), Drehbewegungen um die Längsachse des Halses 16 (Fig. 5) und seitliche Schwenkbewegungen (Fig. 6) des Phantomkopfes erlaubt. Dabei gehen die vorgenannten Schwenkbereiche ineinander über wie es auch bei einem Menschen der Fall ist. Dies wird durch ein Kugelgelenk 17 a ermöglicht, das vorzugsweise etwa im mittleren Längsbereich des Halses 16 etwa in dessen Längsachse 18 angeordnet ist. Dem Kugelgelenk 17a ist vorzugsweise eine noch zu beschreibende Begrenzungsführung 19 zugeordnet, die die Freiheitsgrade (Fig. 4 bis 6) des Halsgelenkes 17 derart begrenzt, daß sie den anatomischen Möglichkeiten des durchschnittlichen, insbesondere erwachsenen Menschen entsprechen. Aus einer normalen Mittellage heraus kann der Phantomkopf 7 eine Nickbewegung a1 nach oben um etwa 25°, eine Nickbewegung a2 nach unten um etwa 40°, eine Drehbewegung b1, b2 um jeweils etwa 45° und eine seitliche Schwenkbewegung c1, c2 von etwa 40° ausführen, wobei diese Bewegungen ineinanderübergehen, so daß der Phantomkopf auch eine kreisende Bewegung auszuführen vermag.

Der Hals 16 ist an seinem dem Phantomkopf 7 abgewandten Ende kugelförmig gerundet, und er taucht-mit dem gerundeten Endbereich in eine Halsöffnung 21 der Phantombüste 6 ein, die vorzugsweise durch einen etwas hochgezogenen Ringansatz 22 des Schulterbereichs 23 der Phantombüste 6 gebildet ist. Der freie Rand 24 des Ringansatzes 22 weist einen Abstand a (Fig. 2) von etwa 15 bis 25 mm vom Mittelpunkt des Kugelgelenks 17a auf. Zwischen dem Rand 24 und dem gerundeten Endbereich des Halses 16 ist zwischen diesen beiden Teilen eine Teilungsfuge 25 gebildet, die einige Millimeter betragen kann oder bei der Verwendung eines elastisch nachgiebigen Werkstoffs für den Ringansatz 22 auch geschlossen sein kann. Im Bereich der Teilungsfuge 25 ist dem Hals 16 und dem Schulterbereich 23 eine Dreh- und/oder Nickwinkelmesseinrichtung 20 (Fig. 7), vorzugsweise vorne, zugeordnet, die hier durch eine Drehskala 20a (horizontal) und/oder-eine Nickskala 20b (vertikal) gebildet ist. Beide Skalen 20a, 20b können in der neutralen Mittelstellung des Phantomkopfes 7 von 0 ausgehend berechnet sein. Anzeiger für die am Hals 16 angeordnete Nickskala 20b is der Rand 24 der Halsöffnung 21. Anzeiger für die am Ringansatz 22 angeordnete Druckskala 20a ist die Nickskala 20b.

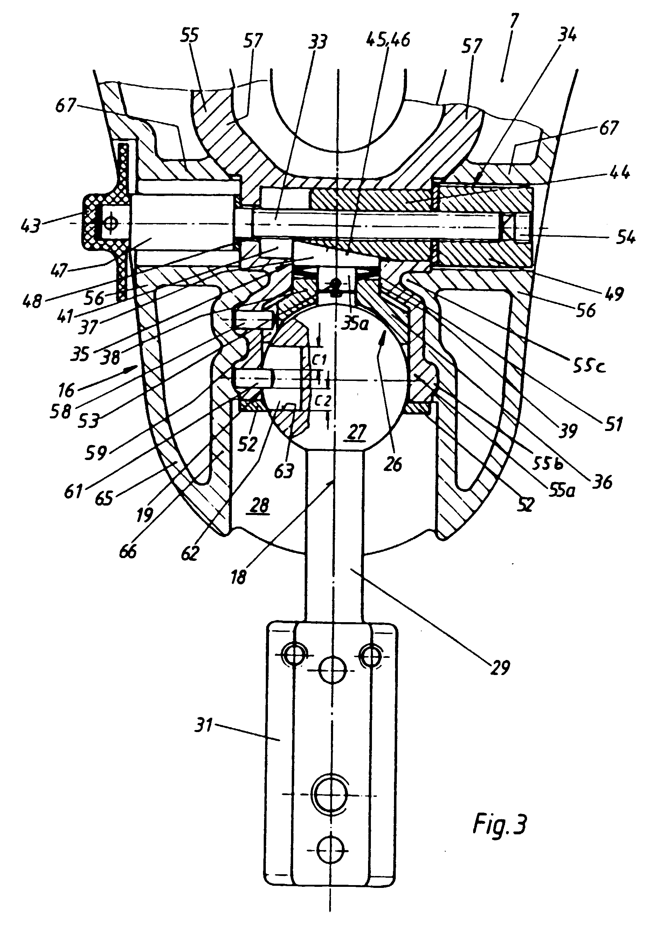

Das Kugelgelenk 17a wird gem. Fig. 2 und 3 durch eine Kugelpfanne 26 und eine Kugel 27 gebildet, von denen die Kugelpfanne 26 durch die Begrenzung einer im Querschnitt runden, koaxialen. Ausnehmung 28 gebildet ist, die am freien Ende des Halses 16 ausmündet. Die Kugel 27 ist am freien Ende einer Tragstange 29 befestigt, die an ihrem unteren Ende mit einem Stangenfuß 31 an einem inneren Tragteil der rückseitig ganz oder teilweise offenen Phantombüste 6 oder an einem in die Büste 6 hineinragenden Tragteil 32 des Schwenkgelenks 8 lösbar befestigt ist und in die Ausnehmung 28 hineinragt. In der Normalstellung oberhalb des Halsgelenkes 17 wird der Hals 16 radial von einer vorzugsweise manuell betätigbaren Handschraube oder Spannschraube 33 durchsetzt, mit der die Reibung bzw. Leicht- oder Schwergängigkeit des Halsgelenkes 17 wahlweise einstellbar ist. Hierzu dient vorzugsweise eine Handschraube, die mittels eines Getriebes 34 mittelbar oder unmittelbar gegen ein längs der Halsachse 18 verschiebbar geführtes Druckstück 35 oder ein Kugelpfannenteil 36 gegen die Kugel 27 drückt. Bei der vorliegenden Ausgestaltung sind das Druckstück 35 mit einem runden Scheibenkopf 37 und das Kugelpfannenteil 36 mit einem oberen Ansatz 38 in einer axialen Führungsbohrung 39 verschiebbar gelagert, die sich vom das Kugelpfannenteil 36 aufnehmenden Ausnehmungsraum nach oben erstreckt und in eine Querbohrung 41 mündet, in der sich die Spannschraube 33 befindet, die sich vorzugsweise seitlich bis zum Umfang des Halses 16 erstreckt und dort ein Drehangriffselement befestigt aufweist, vorzugsweise in Form einer Scheibe mit einem außenseitigen Drehsteg 43, der manuell ergriffen werden kann. Bei der vorliegenden Ausgestaltung ist das Getriebe 34 ein Keilgetriebe mit einem Zugkeil 44, der undrehbar im Querloch 41 aufgenommen ist, in den die Spannschraube 33 eingeschraubt ist und der mit einer Schrägfläche 45 gegen eine entsprechende Schrägfläche 46 hier am Druckstück 35 zusammenwirkt. Die Spannschraube 33 liegt mit einem versenkten Kopf 47 an einer Schulter 48 des Querlochs 41 an, und sie faßt mit dem freien Ende ihres Gewindeschaftes in eine im Querloch 41 gegenüberliegend angeordnete Mutter 49 ein. Zwischen dem Druckstück 35 und dem Kugelpfannenteil 36 ist eine Druckfeder 51 angeordnet, die das Kugelpfannenteil 36 gegen die Kugel 27 beaufschlagt und gegen einen ringförmigen Kugelpfannendeckel 52 drückt, der an der Kugel 27 dem Kugelpfannenteil 36 gegenüberliegend anliegt und an der Kugelpfanne 26 befestigt ist. Bei der vorliegenden Ausgestaltung weist das Druckstück 35 einen koaxialen Zapfen 35a auf, der in eine Zapfenbohrung des Kugelpfannenteils 36 einfaßt und mittels eines Querstiftes 53 längs der Halsachse 18 verschiebbar jedoch undrehbar am Kugelpfannenteil 36 gehalten ist. In der Mutter 49 ist eine von außen zugängliche, vorzugsweise spitze Einstellschraube 54 eingeschraubt, mit der die Einschraubtiefe der Spannschraube 33 und somit die Druck- bzw. Klemmspannung des Halsgelenks 17 begrenzbar ist.

Bei der vorliegenden Ausgestaltung befindet sich die Kugelpfanne 26 in einem Einsatzstück 55, vorzugsweise aus Metall, das quer in eine entsprechende Aufnahme des Phantomkopfes 7 formschlüssig einsetzbar ist und den mittleren Teil des Querlochs 41 bildet, in dem der Zugkeil 44 sitzt, wobei zu beiden Seiten in den vorhandenen Halswänden 56 vorhandene Querlochabschnitte damit fluchten. Auch die Schulter 48 ist am Einsatzstück 55 ausgebildet. Das Einsatzstück 55 weist auch sich nach oben fortsetzende Haltearme 57 auf, die der Befestigung am Phantomkopf 7 dienen. Der Kugelpfannendeckel 52 ist am unteren Rand des unterseitig offenen, das Kugelpfannenteil 36 aufnehmenden, hutförmigen Endbereichs 55a des Einsatzstücks 55 befestigt. Mit 58 ist ein Sicherungsstift bezeichnet, der in einem Querloch der Wandung des Einsatzstücks 55 sitzt und nach innen in eine Ausnehmung 59 des kegelförmigen Abschnitts des Kugelpfannenteils 36 einfaßt. Es ist vorteilhaft, die Anordnung so zu treffen, daß das Einsatzstück 55 von vorne und quer zu Halsachse 18 in den Kopf 7 einsetzbar und durch parallel zu dieser Einsatzrichtung 55b und Vertiefungen 55c formschlüssig gegen eine Verschiebung längs der Halsachse 18 im Kopf 7 gehalten ist.

Die Begrenzungsführung 19 wird durch einen bezüglich der Gelenkkugel 27 radial angeordneten Führungsstift 61 gebildet, der ebenfalls in einem Loch der Kugelpfannen 26, hier des Endbereichs 55a fest eingesetzt ist, und in ein Führungsloch 62 in der Gelenkkugel 27 einfaßt. Das Führungsloch 62 ist in seiner Querschnittsabmessung größer bemessen, als der Führungsstift 61, wodurch sich in der Mittelstellung des Phantomkopfes 7 nach allen Seiten Abstände, hier die sichtbaren Abstände c1, c2 zwischen dem Führungsstift 61 und der Umfangswandung des Führungslochs 63 vorhanden sind. Die Bewegungen des Phantomkopfes 7 werden somit durch Anschlag des Führungstiftes 61 gegen die Umfangswandung 63 des Führungslochs 62 begrenzt.

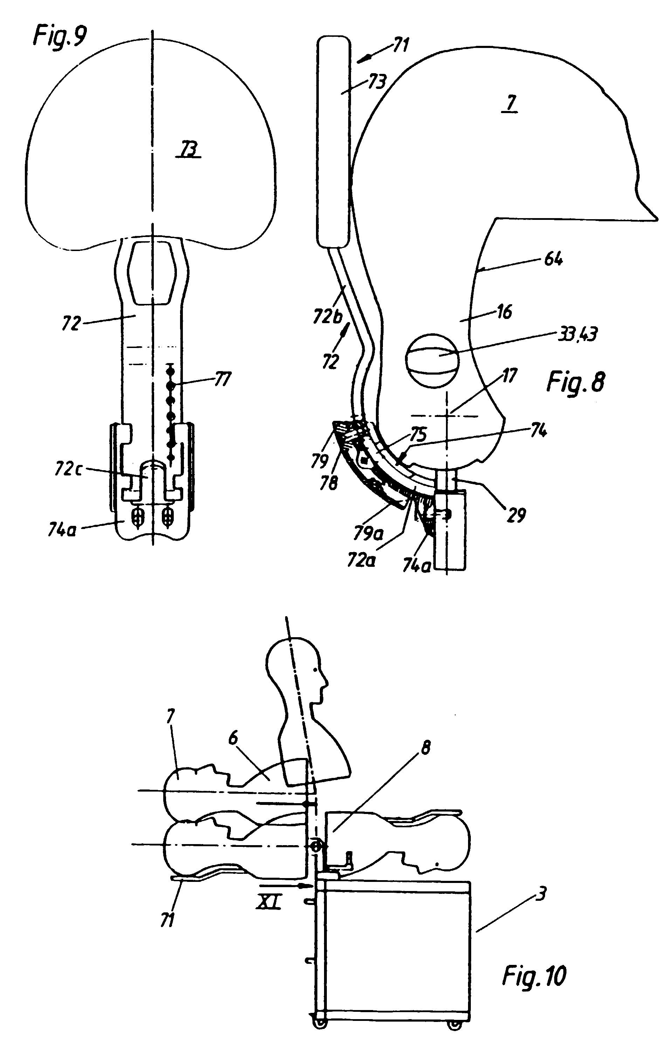

Der Mundbereich des Phantomkopfes 7 wird durch ein lösbar montierbares Anbauteil gebildet, das in einer entsprechenden Gesichtsausnehmung 64 des Phantomkopfes einsetzbar ist und gem. Fig. 8 entfernt ist. Aus Gewichts- und Materialersparnisgründen ist die hohlzylindrische Halswand 56 hohl ausgebildet, so daß Außen- und Innenwände 65, 66 vorhanden sind. Letztere sind durch die äußeren Bereiche des Querlochs 41 umgebende Rohrwände 67 einteilig miteinander verbunden. Mit Ausnahme diverser Einsatzteile besteht der Phantomkopf 7 aus Kunststoff.

Zur zusätzlichen Halterung bzw. Unterstützung des Phantomkopfes 7 ist eine Hinterkopfstütze 71 vorgesehen, die am Träger 4, hier an der Tragstange 29 so in der vertikalen Mittelebene des Phantomkopfes 7 stufenlos oder in Stufen verstellbar und in der jeweiligen Feststellposition feststellbar ist, daß sie in den Phantomkopf 7 in seinen Einstellungen zu unterstützen vermag. Die Kopfstütze 71 besteht aus einem Tragsteg 72 aus Flachmaterial wie Kunststoff oder Metall, an dessen freien Ende eine Stützplatte 73 befestigt ist. Der Tragsteg 72 ist im Bereich seines Fußendes so verstellbar gehalten, daß die Stützplatte 73 in der Vertikalebene schwenkbar ist. Hierzu dient eine kreisabschnittsfõrmige Bogenführung 74 mit einem entsprechend gekrümmten Führungsschacht 75, in dem der in seinem Fußbereich entsprechend gekrümmte Tragsteg 72 verschiebbar geführt ist. Ein Fußflansch 74a der Bogenführung 74 ist mittels Befestigungsschrauben an einer Fußplatte 31 der Tragstange 29 befestigt, wobei sie das gerundete freie Ende des Halses 16 in einem geringen Abstand umgibt. In der Phantombüste 6 ist eine rückseitige Ausnehmung für die Bogenführung 74 vorhanden. Vom gekrümmten Längsabschnitt 72a erstreckt sich der Tragsteg 72 mit einem geraden Längsabschnitt 72b zur Stützplatte 73. Zur Feststellung des Tragstegs 72 sind in ihm in einer Längsreihe Einrastlöcher 77 vorgesehen, in die eine an der Bogenführung 74 gehaltene Rastnase 78 einrastbar ist, die an einem einarmigen oder doppelarmigen Einrasthebel 79 befestigt ist, der an der Bogenführung 74 schwenkbar gelagert ist, durch Federkraft in die Einraststellung vorgespannt ist und durch Fingerdruck in die entgegengesetzte Richtung, z.B. gegen den Doppelarm 79a ausrastbar ist. Der gekrümmte Tragstegabschnitt 72a weist an seinem Fußende einen ausmündenden Schlitz 72c auf, in den die Tragstange 29 einzutauchen vermag.

Dem den Phantomkopf 7 oder die Phantombüste 6 tragenden Schwenkgelenk 8 ist eine stufenlos oder in Stufen wirksame Feststellvorrichtung 81 zugeordnet, die ein stufenloses Einstellen einer Gelenk-Klemmkraft oder - Reibungskraft ermöglicht. Hierdurch kann das Schwenkgelenk 8 festgestellt oder gelöst werden oder es kann auch so eingestellt werden, daß die Feststellkraft ausreicht, die bei der Behandlung des Phantomkopfes 7 auftretenden Belastungen aufzunehmen und zur Verschwenkung des Phantomkopfes 7 mit seinem Träger 32 manuell überdeckbar ist. Hierdurch wird der Aufwand wesentlich vereinfacht.

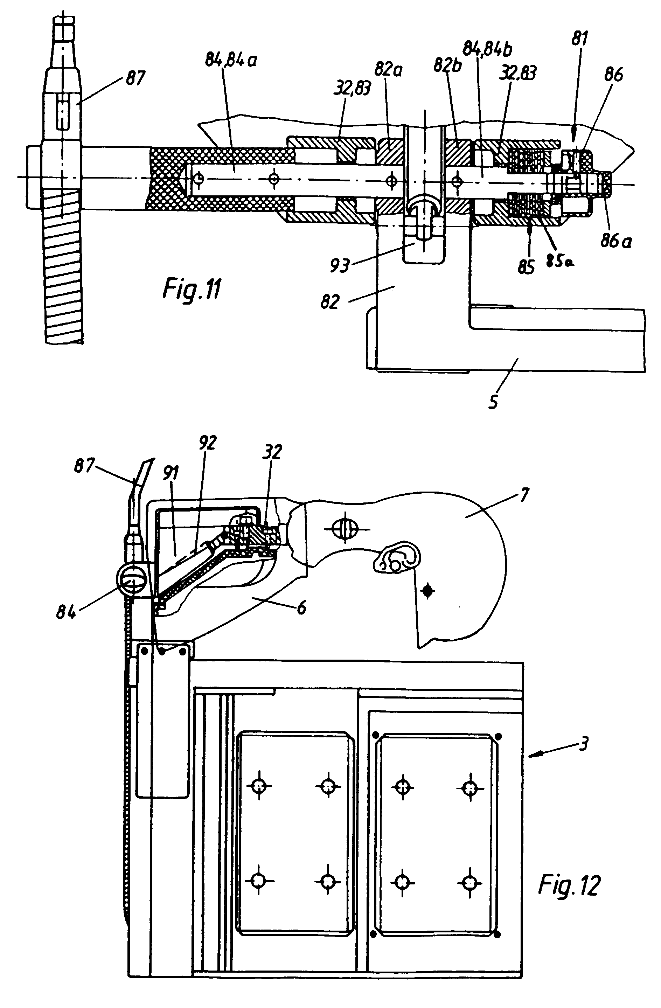

Die Feststellvorrichtung 81 ist in die Lagerung des Trägers 32 integriert. Bei der vorliegenden Ausgestaltung gem. Fig. 11 ragt vom freien Ende des horizontalen Tragarms 5 ein Gelenkkopf 82 nach oben, der von zwei Gelenkseitenteilen des Trägers 32 gabelförmig seitlich umgriffen ist, wobei eine horizontale Gelenkachse 84 den Gelenkkopf 82 und die Gelenkseitenteile 83 in Gelenkbohrungen durchfaßt und das Gelenk bildet. An einem Ende, hier dem rechten Ende der Gelenkachse 84 sind wenigstens eine, vorzugsweise mehrere Kupplungs- bzw. Reibscheiben 85 in einer topfförmigen endseitigen Ausnehmung 85a des zugehörigen Gelenkseitenteils 83 vorgesehen, die die stufenlos einstellbare Reibschlußverbindung zwischen der Gelenkachse 84 und dem rechten Gelenkseitenteil 83 bilden. Bei mehreren Reibscheiben 85 ist jede zweite drehfest mit der Gelenkachse 84 verbunden, während die anderen drehfest mit dem zugehörigen Gelenkseitenteil 83 verbunden sind. Die Gelenkachse 84 weist an ihrem freien Ende ein Außengewinde auf, auf das eine Einstellmutter 86 aufgeschraubt ist, die wenigstens ein Griffelement 86a für den manuellen Angriff zum Drehen aufweist. Durch mehr oder weniger starkes Anziehen der Einstellmutter 86 läßt sich das Schwenkgelenk 8 feststellen oder im vorbeschriebenen Sinne einstellen.

Das andere Ende der Gelenkachse 84 ist ggfs. mit einem Verlängerungsstück verlängert und trägt an seinem freien Ende eine Halterung für ein mit einem Versorgungsschlauch verbundenes zahnärztliches Absaugrohr 87, das z.B. in einer Ausnehmung der Gelenkachse 84 eingehängt ist.

Wie insbesondere aus Fig. 12 zu entnehmen ist, ist zwischen dem Träger 32 und dem Tragunterteil hier dem horizontalen Tragarm 5 oder Gelenkkopf 82 eine Schwenkhilfsvorrichtung 91 zugeordnet, die beim Schwenken des Phantomkopfes 7 mit seinem Träger 4 in die Rückenlage gem. Fig. 1 oder in die Bauchlage gem. Fig. 12 gespannt wird und somit eine das Hochschwenken unterstützende Hilfskraft speichert, die das manuelle Verschwenken zwischen den beiden vorgenannten Stellungen erleichtert. Die Schwenkhilfsvorichtung 91 kann eine pneumatische oder eine mechanische Feder wie eine Wendelfeder aufweisen. Die Feder 92 befindet sich in der Phantombüste 6. Ihr oberes Ende ist an einem Anbauteil des Trägers 32 schwenkbar gehalten, das einen Abstand vom Schwenkgelenk 8 aufweist. Das untere Ende der Feder 92 ist an einem Befestigungspunkt schwenkbar gehalten, der bezüglich des Schwenkgelenks 8 nach vorne versetzt ist und vorzugsweise etwas tiefer liegt. Dabei ist die Anordnung bzw. Lange der Feder 92 so gemessen, daß sie in der Rückenlage des Phantomkopfes gem. Fig. 1 und in der Bauchlage gem. Fig. 12 gespannt ist. Um ein solches Hin- und Herschwenken des Phantomkopfes 7 zu ermöglichen, ist im Gelenkkopf 82 eine vertikale Ausnehmung 93 vorgesehen, die auch die Gelenkachse 84 kreuzt und somit in zwei seitliche Gelenkachsenteile 84a, 84b teilt, die drehfest mit den verbleibenden Gelenkkopfwangenteilen 82a, 82b verbunden sind. Beim Hin- und Herschwenken vermag die Feder 92 in die Ausnehmung 93 mit Bewegungsspiel einzutauchen ohne daß sie ausknickt.

Um den Phantomkopf 7 oder die Phantombüste 6 unabhängig von ihren Schwenkstellungen an unterschiedlich hohe Arbeitspositionen anpassen zu können, ist der Träger 4 mittels einer Höhenverstellvorrichtung 94 vertikal verstellbar und in der jeweiligen Höhenstellung feststellbar am Unterteil 3 gelagert. Hierzu dient eine vertikale, im Querschnitt vorzugsweise viereckige Tragsäule 95, die an bzw. in einer vertikalen Führung 96 des Unterteils 3 vertikal verschiebbar gelagert und dabei undrehbar gehalten ist. Bei der vorliegenden Ausgestaltung ist im Unterteil 3 vorzugsweise im vorderen Seiten- insbesondere Eckenbereich einer Seite, hier rechts, eine vertikale Führungsausnehmung mit einer der Tragsäule 95 entsprechenden Querschnittsform und -größe vorgesehen, in der die Tragsäule 95 vertikal verschiebbar gelagert ist. Zum vertikalen Verschieben dient eine vertikale, in der Tragsäule 95 drehbar gelagerte Gewindespindel 97, die das obere geschlossene Ende der Tragsäule 95 in einem Loch durchragt und mit ihrem oberen Ende drehfest mit einer Kurbel 98 verbunden oder verbindbar ist. In der hohlen Tragsäule 95 oder unterhalb davon ist eine am Unterteil 3 befestigte Spindelmutter 99 angeordnet, in die die Gewindespindel 97 eingeschraubt ist. Die Gewindespindel 97 ist in der Tragsäule 95 drehbar jedoch in ihrer Längsrichtung unverschiebbar gelagert, so daß durch ein Ein- oder Ausschrauben der Gewindespindel die Tragsäule 95 mit dem daran befestigten horizontalen Tragarm 5 mitbewegt wird und somit die gewünschte Arbeitshöhe des Phantomkopfes 7 eingestellt werden kann. Der Tragarm 5 erstreckt sich im wesentlichen parallel zur Frontseite des Unterteils 3 und trägt den Phantomkopf 7 an der Frontseite des Unterteils 3 in dessen etwa mittleren Position.

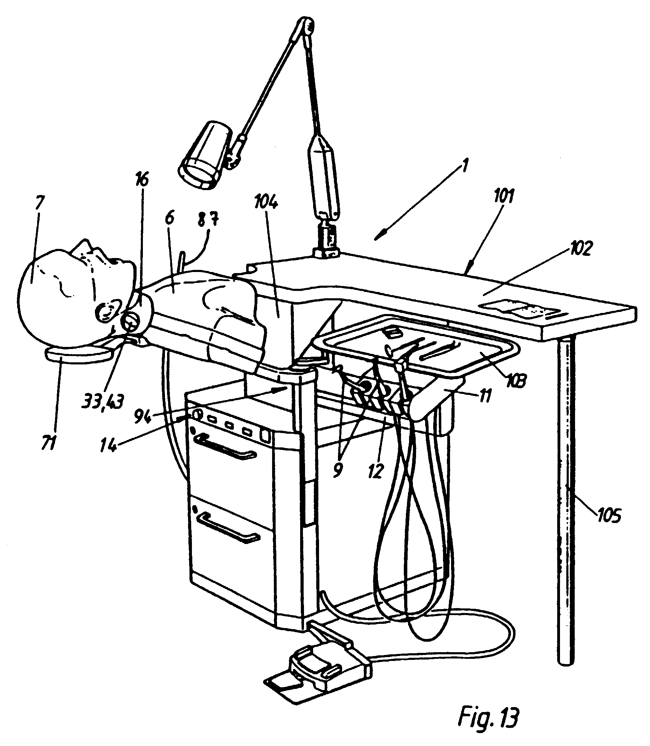

Beim Ausführungsbeispiel nach Fig. 13, bei dem gleiche oder vergleichbare Teile mit gleichen Bezugszeichen versehen sind, ist dem hier stationären Lehr- und Übungsgerät 1 ein Arbeitstisch 101 zugeordnet, der sich über und im hinteren Bereich des Unterteils 3 befindet und vorzugsweise zu der Seite hin, zu der die Höhenverstellvorrichtung 94 versetzt ist, verbreitert bzw. verlängert ist. An ihrem linken Ende ist die Tischplatte 102 auf einem Aufsatz 104 abgestützt, der auf dem Unterteil 3 vorzugsweise in dessen hinteren linken Eckenbereich steht. Zur Abstützung des rechten Endes der Tischplatte 102 ist ein Tischbein 105 vorgesehen.

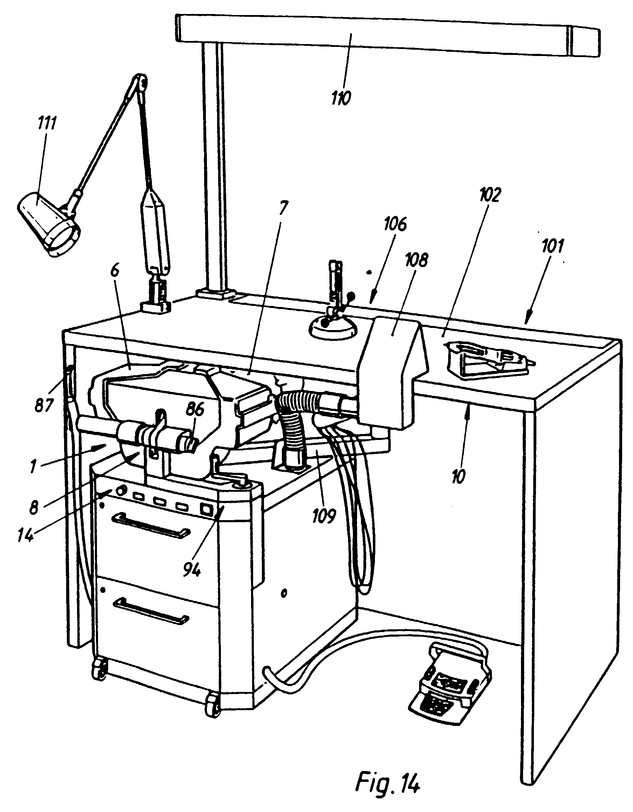

Beim Ausführungsbeispiel nach Fig. 14, bei dem ebenfalls gleiche oder vergleichbare Teile mit gleichen Bezugszeichen versehen sind, ist das zahnärztliche Lehr- und Übungsgerät 1 mit einem tischförmigen zahntechnischen Lehr- und Übungsgerät oder Bearbeitungsgerät 106 kombiniert, das vorzugsweise feststeht. Dabei ist die Anordnung so getroffen, daß das zahnärztliche Gerät 1 bei in die Bauchlage geschwenktem Phantomkopf 7 unter die Tischplatte 102 dieses Gerätes 106 schiebbar ist, wobei der Arbeitstische 101 dieses Arbeitsgeräts 106 etwa doppelt so breit bemessen ist, wie das zahnärztliche Arbeitsgerät 1, so daß sich daneben ein zahntechnischer Arbeitsplatz 108 befindet. Dem Arbeitstisch 101 des zahntechnischen Arbeitsgeräts 106 sind nicht dargestellte Bearbeitungswerkzeuge und eine Staub-Absaugvorrichtung 108 zugeordnet, die vorzugsweise von einer dem zahnärztlichen Arbeitsgerät 1 zugeordneten, auch das Absaugrohr 87 versorgenden gemeinsamen Absaugeinrichtung versorgt wird und am zahntechnischen Lehr- und Übungsgerät oder Bearbeitungsgerät 106, insbesondere am zahntechnischen Lehr- und Übungsgerät oder Bearbeitungsgerät 106, insbesondere im mittleren Bereich des Arbeitsplatzes 108 an der Tischplatte 108 oder an einem sich horizontal seitlich neben dem Arbeitsgerät 1 erstreckenden und horizontal schwenkbar in einem Gelenk am Unterteil 3 gelagerten Tragarm 109 gehalten ist. Dieser Gerätekombination ist gemeinsam eine feststehende und/oder bewegliche Lampe 110, 111 am zahntechnischen Arbeitsgerät 106 zugeordnet.

Alle vorbeschriebenen Ausführungsbeispiele sind von Rechts- auf Links-Ausführung umrüstbar. Dies wird unter anderem durch die seitlich umschwenkbare Anordnung des Tragarms 12 und/oder 109 gewährleistet.

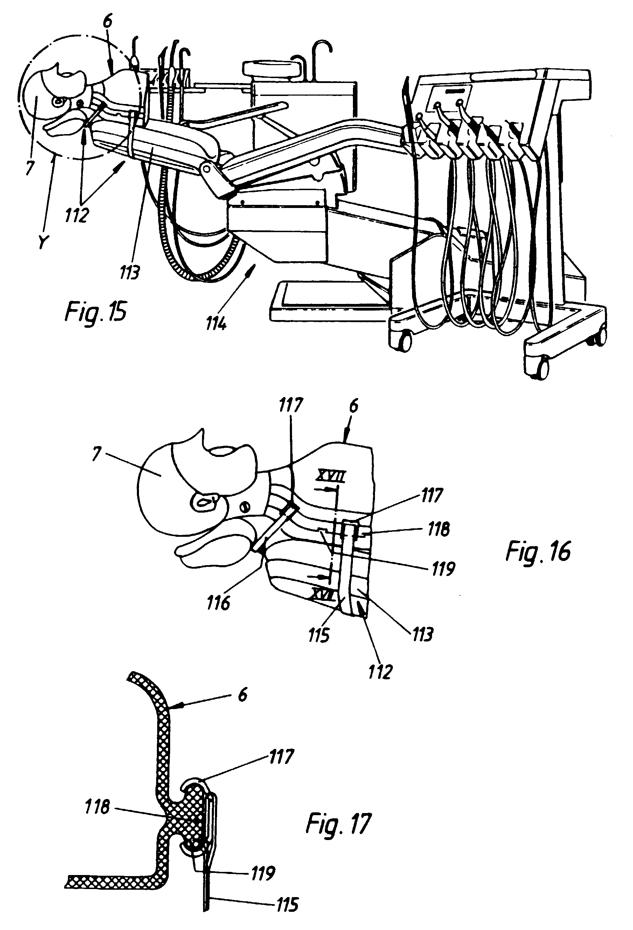

Die Phantombüste 6 ist lösbar am stangenförmigen Tragteil 32 (Fig. 2) befestigt, das ein- oder mehrteilig mit den Gelenkseitenteilen 83 (Fig. 11) verbunden ist. Eine handhabungsfreundliche Zugänglichkeit zu diesen Befestigungsteilen ist durch den ganz oder teilweise offenen Rückenbereich der Phantombüste 6 gewährleistet. Wie aus Fig. 15 zu entnehmen ist, kann die Phantombüste 6 mit dem Phantomkopf 7 mittels einer Gurtbefestigungsvorrichtung 112 auch an anderen Übungs- bzw. Behandlungsgeräten, insbesondere am Rückenteil 113 eines zahnärztlichen Behandlungsstuhls 114 lösbar befestigt werden. Hierzu kann ein Gurt 115 oder auch ein weiterer Gurt 116 dienen, die vorzugsweise zugelastisch sind und mittels an ihren Enden befestigten Haltelementen vorzugsweise formschlüssig mit der Phantombüste 6 verbindbar sind. Bei der vorliegenden Ausgestaltung sind die Halteelemente durch C-förmige Spangen 117 aus Metall oder Kunststoff gebildet, die jeweils einen im Schulterbereich und seitlich der Phantombüste 6 vorzugsweise durchgehend verlaufenden Haltesteg 118 formschlüssig übergreifen, der vorzugsweise an der aus Kunststoff bestehenden Phantombüste 6 angeformt ist. Um die formschlüssige Halterung zu gewährleisten, ist der Haltesteg 118 ein- oder beidseitig hinterschnitten, so daß die Spangen 117 ihn formschlüssig hintergreifen können. In der aufgesetzten Position sind die Spangen 117 längs des Haltestegs 118 auf diesem verschiebbar, und sie können somit endseitig des zugehörigen Haltestegs 118 aufgesetzt bzw. abgezogen werden. Vorzugsweise sind jedem Haltesteg 118 ein oder mehrere Ein- und Ausgangsöffnungen 119 für die Spangen 117 vorgesehen, die durch ein- oder beidseitige Verjüngungen oder Taillierungen des Haltestegs 118 gebildet sind, in denen die Spangen 117 aufsteckbar bzw. abziehbar sind. Bei der vorliegenden Ausgestaltung sind zwei Gurte 115, 116 vorgesehen, von denen der eine das Rückenteil 113 im Brustbereich der Phantombüste 6 umspannt und der andere das Rückenteil 113 im eingeformt verlaufenden Nackenbereich umspannt.

Die Anordnung nach Fig. 15 ermöglicht es somit, Lehr- und Übungsarbeiten auch an einem üblichen zahnärztlichen Behandlungsstuhl 114 und somit in der Praxis durchzuführen und den Behandlungsstuhl 114 handhabungsfreundlich umzurüsten.

## Patentansprüche

1. Lehr- und Übungsgerät (1) zur Simulation und Übung zahnärztlich-klinischer Arbeitsgänge, mit einem Phantomkopf (7), der durch ein Gelenk (17), insbesondere ein Kugelgelenk, in verschiedene Arbeitsstellungen schwenkbar und in der jeweiligen Schwenkstellung feststellbar an einem Träger (29) gelagert ist und einen Hals (16) aufweist, in dem das Gelenk (17) angeordnet ist, wobei das Gelenk (17) durch ein Einstellglied lösbar und feststellbar ist, das von außen zugänglich ist,
**dadurch gekennzeichnet,**
daß der Hals (16) starr am Kopf (7) befestigt ist, aus festem Material besteht und ein Tragteil zwischen dem Kopf (7) und einem Kopfträger (29) bildet, und daß das Einstellglied den Hals (16) quer durchsetzt und von einer bezüglich des Halses (16) seitlichen Position her zugänglich ist.

2. Lehr- und Übungsgerät nach Anspruch 1,
**dadurch gekennzeichnet,**
daß das Einstellglied durch eine Handschraube (33) gebildet ist.

3. Lehr- und Übungsgerät nach Anspruch 1 oder 2,
**dadurch gekennzeichnet,**
daß das Gelenk durch das Einstellglied oder die Handschraube (33) einstellbar ist.

4. Lehr- und Übungsgerät (1) nach einem der vorherigen Ansprüche,
dadurch **gekennzeichnet,**
daß das Gelenk (17) zwischen dem Kopfträger (29) und einem inneren Querteil des Halses (16) angeordnet ist.

5. Lehr- und Übungsgerät nach einem der vorherigen Ansprüche,
dadurch **gekennzeichnet,**
daß der Hals (16) eine an seinem unteren Ende etwa koaxial ausmündende Eingriffsausnehmung (28) aufweist und der Kopfträger (4) eine in die Eingriffsausnehmung (28) eingreifende Tragstange (29) ist.

6. Lehr- und Übungsgerät nach einem der vorherigen Ansprüche,
dadurch **gekennzeichnet,**
daß das Gelenk (17) ein Kugelgelenk ist und ein Wandteil (36) der Kugelpfanne (26) durch ein Spannglied (35, 36) gegen die Gelenkkugel (27) spannbar ist.

7. Lehr- und Übungsgerät nach Anspruch 6,
dadurch **gekennzeichnet,** daß das Kugelgelenk (17) zwischen dem Kopf (7) zugewandten Ende der Tragstange (29) und dem die Eingriffsausnehmung (28) begrenzenden Querteil im Hals (16) angeordnet ist.

8. Lehr- und Übungsgerät nach einem der vorherigen Ansprüche,
dadurch **gekennzeichnet,**
daß der Kopf (7) am Hals (16) einteilig angeformt ist.

9. Lehr- und Übungsgerät nach einem der vorherigen Ansprüche,
dadurch **gekennzeichnet**,
daß das Gelenk (16) im mittleren Längsbereich des Halses (16) angeordnet ist.

10. Lehr- und Übungsgerät nach einem der vorherigen Ansprüche 2 bis 9,
dadurch **gekennzeichnet,**
daß die Handschraube (33) den Hals (16) seitlich durchsetzt.

11. Lehr- und Übungsgerät nach einem der vorherigen Ansprüche,
dadurch **gekennzeichnet,**
daß dem Gelenk (17) eine Bewegungsbegrenzungsführung (19) zugeordnet ist, die die Freiheitsgrade des Gelenks (17) so begrenzt, daß sie den anatomischen Möglichkeiten eines durchschnittlichen Menschen entsprechen.

12. Lehr- und Übungsgerät nach Anspruch 11,
dadurch **gekennzeichnet,**
daß die Bewegungsbegrenzungsführung (19) durch ein in dem einen Gelenkteil angeordnetes Führungsloch (62) und einen vom anderen Gelenkteil radial nach innen vorspringenden und in das Führungsloch (62) einfassenden Führungszapfen (61) gebildet ist.

13. Lehr- und Übungsgerät nach einem der vorherigen Ansprüche,
dadurch **gekennzeichnet,**
daß dem Phantomkopf (7) eine Phantombüste (6) zugeordnet ist, die in ihrem Schulterbereich eine Halsöffnung (21) für das untere Ende des Halses (16) aufweist.

14. Lehr- und Übungsgerät nach einem der vorherigen Ansprüche,
dadurch **gekennzeichnet,**
daß dem Phantomkopf (7) eine Meß- und/oder Anzeigevorrichtung (20) für die Nickbewegung und/oder Seitenbewegung und/oder Drehbewegung des Phantomkopfes zugeordnet ist.

15. Lehr- und Übungsgerät nach Anspruch 14,
dadurch **gekennzeichnet,**
daß die Meß- und/oder Anzeigevorrichtung (20) eine oder mehrere Skalen (20a, 20b, 20c) zum Messen, Anzeigen oder Einstellen der zugehörigen Bewegungsgröße aufweist.

16. Lehr- und Übungsgerät nach Anspruch 15,
dadurch **gekennzeichnet,**
daß die wenigstens eine Skala am Hals (16) und am dem Hals (16) zugewandten Teil (Schulterbereich 23) der Phantombüste (6) angeordnet ist.

17. Lehr- und Übungsgerät nach einem der vorherigen Ansprüche,
dadurch **gekennzeichnet,**
daß dem Phantomkopf (7) eine Hinterkopfstütze (71) zugeordnet ist, die stufenlos oder in Stufen zur Anpassung an Kopfeinstellungen verstellbar und in der jeweiligen Verstellposition feststellbar ist.

18. Lehr- und Übungsgerät nach einem der vorherigen Ansprüche,
dadurch **gekennzeichnet,**
daß der Kopf- oder Büstenträger (4) um eine horizontale Querachse schwenkbar durch ein Schwenkgelenk (8) mit einem Trägerunterteil (5) verbunden und in der jeweiligen Schwenkstellung durch eine manuell betätigbare Feststellvorrichtung (81) einstellbar ist.

19. Lehr- und Übungsgerät nach einem der vorherigen Ansprüche,
dadurch **gekennzeichnet,**
daß dem Schwenkgelenk (8) eine Ausgleichs- oder Hochschwenkvorrichtung (91) zugeordnet ist, die beim Schwenken des Phantomkopfes (7) mit dem Kopfträger (4) in die Rücken- und/oder in die Bauchlage gespannt wird.

## Claims

1. Training and practice apparatus (1) for simulating and practising dental/clinical procedures, the said apparatus having a manikin head (7) which can be pivoted by a joint (17), in particular a ball joint, into various working positions, is mounted on a carrier (29) so as to be capable of being immobilised in the particular pivoting position, and has a neck (16) in which the joint (17) is disposed, the said joint (17) being capable of being released and immobilised by a setting member which is accessible from outside,
**characterised in that**
the neck (16) is rigidly fastened to the head (7), consists of solid material and forms a carrying part between the head (7) and the head-carrier (29), and that the setting member passes transversely through the neck (16) and is accessible from a position which is lateral with respect to the neck (16).

2. Training and practice apparatus according to claim 1,
**characterised in that**
the setting member is formed by a hand screw (33).

3. Training and practice apparatus according to claim 1 or 2,
**characterised in that**
the joint can be set by the setting member or the hand screw (33).

4. Training and practice apparatus (1) according to one of the preceding claims,
**characterised in that**
the joint (17) is disposed between the head-carrier (29) and an internal transverse part of the neck (16).

5. Training and practice apparatus according to one of the preceding claims,
**characterised in that**
the neck (16) has, at its lower end, an engagement recess (28) which opens out approximately coaxially, and the head-carrier (4) is a carrying bar (29) engaging in the engagement recess (28).

6. Training and practice apparatus according to one of the preceding claims,
**characterised in that**
the joint (17) is a ball joint and a wall part (36) of the ball socket (26) can be clamped against the joint ball (27) by a clamping member (35, 36).

7. Training and practice apparatus according to claim 6,
**characterised in that**
the ball joint (17) is disposed between that end of the carrying bar (29) which faces towards the head (7) and that transverse part in the neck (16) which delimits the engagement recess (28).

8. Training and practice apparatus according to one of the preceding claims,
**characterised in that**
the head (7) is moulded onto the neck (16) in one piece.

9. Training and practice apparatus according to one of the preceding claims,
**characterised in that**
the joint (17) is disposed in the central longitudinal region of the neck (16).

10. Training and practice apparatus according to one of the preceding claims 2 to 9,
**characterised in that**
the hand screw (33) passes laterally through the neck (16).

11. Training and practice apparatus according to one of the preceding claims,
**characterised in that**
there is associated with the joint (17) a movement-limiting guide (19) which limits the degrees of freedom of the joint (17) in such a way that they correspond to the anatomical potentialities of an average human being.

12. Training and practice apparatus according to claim 11,
**characterised in that**
the movement-limiting guide (19) is formed by a guide hole (62) disposed in one joint part and by a guide peg (61) projecting radially inwards from the other joint part and catching in the guide hole (62).

13. Training and practice apparatus according to one of the preceding claims,
**characterised in that**
there is associated with the manikin head (7) a manikin bust (6) which has, in its shoulder region, a neck opening (21) for the lower end of the neck (16).

14. Training and practice apparatus according to one of the preceding claims,
**characterised in that**
there is associated with the manikin head (7) a measuring and/or indicating device (20) for the nodding movement and/or lateral movement and/or turning movement of the manikin head.

15. Training and practice apparatus according to claim 14,
**characterised in that**
the measuring and/or indicating device (20) has one or more scales (20a, 20b, 20c) for measuring, indicating or setting the appertaining quantity of motion.

16. Training and practice apparatus according to claim 15,
**characterised in that**
the scale, of which there is at least one, is disposed on the neck (16) and on that part (shoulder region 23) of the manikin bust (6) which faces towards the neck (16).

17. Training and practice apparatus according to one of the preceding claims,
**characterised in that**
there is associated with the manikin head (7) a rear head support (71) which can be adjusted in an infinitely variable manner or in steps for the purpose of adapting to head settings, and can be immobilised in the particular adjustment position.

18. Training and practice apparatus according to one of the preceding claims,
**characterised in that**
the head-carrier or bust-carrier (4) is connected by a pivot joint (8) to a lower part (5) of the carrier so as to be pivotable about a horizontal transverse axis, and can be set in the particular pivoting position by a manually actuatable immobilising device (81).

19. Training and practice apparatus according to one of the preceding claims,
**characterised in that**
there is associated with the pivot joint (8) a counterbalancing or upward-pivoting device (91) which is tensioned when the manikin head (7) pivots, with the head-carrier (4), into the dorsal and/or ventral position.

## Revendications

1. Appareil d'enseignement et d'entraînement (1) pour la simulation et l'apprentissage de méthodes de travail clinico-dentaires, comprenant une tête de mannequin (7) qui est montée par une articulation (17), en particulier une articulation à rotule, de manière à pouvoir être amenée par pivotement dans différentes positions de travail et à pouvoir être bloquée dans la position de pivotement respective, et qui présente un cou (16) dans lequel est disposé l'articulation (17), laquelle articulation (17) peut être libérée et bloquée par un organe de réglage accessible de l'extérieur,
caractérisé par le fait
que le cou (16) est fixé rigidement à la tête (7), est constitué par un matériau solide et forme une partie de support entre la tête (7) et un porte-tête (29), et que l'organe de réglage traverse le cou (16) transversalement et est accessible d'un position latérale par rapport au cou (16).

2. Appareil d'enseignement et d'entraînement suivant la revendication 1,
caractérisé par le fait
que l'organe de réglage est constitué par une vis à main (33).

3. Appareil d'enseignement et d'apprentissage suivant la revendication 1 ou 2,
caractérisé par le fait
que l'articulation est réglable par l'organe de réglage ou la vis à main (33).

4. Appareil d'enseignement et d'entraînement suivant les revendications précédentes,
caractérisé par le fait
que l'articulation (17) est disposée entre le porte-tête 29 et une partie transversale interne du cou (16).

5. Appareil d'enseignement et d'entraînement suivant l'une des revendications précédentes,
caractérisé par le fait
que le cou (16) présente un évidement d'engagement (28) débouchant à peu près co-axialement à son extrémité inférieure et que le porte-tête (4) est constitué par une tige de support (29) engagé dans ledit évidement (28).

6. Appareil d'enseignement et d'entraînement suivant l'une des revendications précédentes,
caractérisé par le fait
que l'articulation (17) est une articulation à rotule et qu'une partie de paroi (36) de la cuvette de rotule (26) peut être serré contre la rotule (27) par un organe de serrage (35, 36).

7. Appareil d'enseignement et d'entraînement suivant la des revendication 6,
caractérisé par le fait
que l'articulation à rotule (17) est disposée entre l'extrémité de la tige de support (29), tournée vers la tête (7), et la partie transversale délimitant l'évidement d'engagement (28) dans le cou (6).

8. Appareil d'enseignement et d'entraînement suivant l'une des revendications précédentes,
caractérisé par le fait
que la tête (7) est formée d'une seule pièce sur le cou (16).

9. Appareil d'enseignement et d'entraînement suivant l'une des revendications précédentes,
caractérisé par le fait
que l'articulation (16) est disposée dans la zone médiane de la longueur du cou (16).

10. Appareil d'enseignement et d'entraînement suivant l'une des revendications précédentes 2 à 9,
caractérisé par le fait
que la vis à main (33) traverse le cou (16) latéralement.

11. Appareil d'enseignement et d'entraînement suivant l'une des revendications précédentes,
caractérisé par le fait
qu'à l'articulation (16) est associé un guide de limitation de mouvement (19) qui limite les degrés de liberté de l'articulation (17) de manière qu'ils correspondent aux possibilités anatomiques d'un être humain moyen.

12. Appareil d'enseignement et d'entraînement suivant la revendication 11,
caractérisé par le fait
que le guide de limitation de mouvement (19) est constitué par un trou de guidage (62) disposé dans une partie d'articulation et par un tenon de guidage (61) faisant saillie radialement vers l'intérieur sur l'autre partie d'articulation et pénétrant le trou de guidage (62).

13. Appareil d'enseignement et d'entraînement suivant l'une des revendications précédentes,
caractérisé par le fait
qu'à la tête de mannequin (7) est associé un buste de mannequin (6) qui présente dans la zone des épaules une ouverture de cou (21) pour l'extrémité inférieure du cou (16).

14. Appareil d'enseignement et d'entraînement suivant l'une des revendications précédentes,
caractérisé par le fait
qu'à la tête de mannequin (7) est associé un mouvement de mesure et/ou d'indication (20) pour les mouvements de levée et de baisse et/ou les mouvements latéraux et/ou les mouvements de rotation de la tête de mannequin.

15. Appareil d'enseignement et d'entraînement suivant la revendication 14,
caractérisé par le fait
que le dispositif de mesure et/ou d'indication (20) présente au moins une graduation (20a, 20b, 20c) pour la mesure, l'indication ou le réglage de l'amplitude des mouvements correspondants.

16. Appareil d'enseignement et d'entraînement suivant la revendication 15,
caractérisé par le fait
que ladite graduation est disposée sur le cou (16) et sur la partie (zone des épaules 23) du buste de mannequin (6), tournée vers le cou (16).

17. Appareil d'enseignement et d'entraînement suivant l'une des revendications précédentes,
caractérisé par le fait
qu'à la tête de mannequin (7) est associé un appui-tête (71) qui est réglable sans fin ou graduellement en vue de l'adaptation à des positions de tête et qui peut être bloqué dans la position de réglage respective.

18. Appareil d'enseignement et d'entraînement suivant l'une des revendications précédentes,
caractérisé par le fait
que le porte-tête ou porte-buste (4) est relié par une articulation de pivotement (8) de manière à pouvoir pivoter autour d'un axe transversal horizontal à une partie inférieure de support (5) et peut être positionné dans la position de pivotement respective par un dispositif de blocage (81) à actionnement manuel.

19. Appareil d'enseignement et d'entraînement suivant l'une des revendications précédentes,
caractérisé par le fait
qu'à l'articulation de pivotement (8) est associé un dispositif de compensation ou de relevage par pivotement (91) qui est armé lors du pivotement de la tête de mannequin (7) avec le porte-tête (4) dans la position dorsale et/ou la position ventrale.
